(19) Europäisches Patentamt
European Patent Office
Office européen des brevets

(11) Veröffentlichungsnummer: **0 018 307**
**B1**

(12) # EUROPÄISCHE PATENTSCHRIFT

(45) Veröffentlichungstag der Patentschrift: **10.10.84**

(51) Int. Cl.³: **B 01 J 23/28** // B01J23/24, B01J37/34, C01G39/00, C01G39/02

(21) Anmeldenummer: **80730004.1**

(22) Anmeldetag: **22.01.80**

(54) **Verfahren zur Herstellung von Molybdänoberflächenverbindungen und ihre Verwendungen.**

(30) Priorität: **24.01.79 DE 2903003**

(43) Veröffentlichungstag der Anmeldung: **29.10.80 Patentblatt 80/22**

(45) Bekanntmachung des Hinweises auf die Patenterteilung: **10.10.84 Patentblatt 84/41**

(84) Benannte Vertragsstaaten: **CH DE FR GB NL**

(56) Entgegenhaltungen:
**DE - A - 2 015 543**
**DE - C - 850 001**
**GB - A - 734 501**
**GB - A - 1 331 423**
**US - A - 3 285 942**

**KINETICS AND CATALYSIS, 16 (1975) II (Kuznetsov et al.)**
**ANGEW. CHEMIE, 83 (1971) Nr. 20, Seiten 790, 791 (G. HENRICI OLIVé UND S.OLIVé)**

(73) Patentinhaber: **Hornscheidt, Manfred, Dipl.-Chem., Mommsenstrasse 9, D-1000 Berlin 45 (DE)**

(72) Erfinder: **Hornscheidt, Manfred, Dipl.-Chem., Mommsenstrasse 9, D-1000 Berlin 45 (DE)**

(74) Vertreter: **Maikowski, Michael, Dipl.-Ing. Dr., Xantenerstrasse 10, D-1000 Berlin 15 (DE)**

EP 0 018 307 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Molybdänoberflächenverbindungen mit Molybdän auf oxydischen Trägern werden z. B. als Katalysatoren bei Polymerisationsreaktionen, bei der Ammoniaksynthese und zur Entfernung von Sauerstoffspuren aus einem Prozeßstrom oder Inertgas benutzt. Die entsprechenden Chromverbindungen sind lange bekannt und beschrieben (G. Henrici-Olivé und S. Olivé, Angew. Chem. 71, 782 (1971) mit ausführlicher Literaturübersicht).

Ein Verfahren für die Darstellung der Molybdänoberflächenverbindungen wurde von Kuznetzov et al. beschrieben (Kinetics und Catalysis 16, 1975 II). In der GB-A 13 31 423 wird die Herstellung von Oxydationskatalysatoren mit Molybdän beschrieben.

Der Erfindung liegt die Aufgabe zu Grunde, Molybdänoberflächenverbindungen in der Oxydationsstufe +6 und unter +3 zur Verfügung zu stellen, deren Verwendung aufzuzeigen und ein einfaches, billiges und gefahrloses Verfahren zur Herstellung der Molybdänoberflächenverbindungen bereitzustellen, das in wenigen Stufen mit handelsüblichen Ausgangsstoffen durchführbar ist.

Die Ansprüche enthalten die Lösung der Aufgabe. Erfindungsgemäß wird so vorgegangen, daß Molybdäntrioxid mit einem zweiwertigen Alkohol mit 2 bis 6 C-Atomen zur Reaktion gebracht und das sich ergebende Produkt mit einem oxydischen Träger mit großer Oberfläche zu der Molybdänoberflächenverbindung I mit Molybdän in der Oxydationsstufe +6 umgesetzt wird.

Zur Darstellung der Molybdänoberflächenverbindung I kann als mehrwertiger Alkohol auch ein Alkohol mit zwei vicinalen OH-Gruppen oder, besonders bevorzugt, Äthylenglykol eingesetzt werden. Als oxydische Träger mit großer Oberfläche und OH-Gruppen können z. B. Kieselgel und $Al_2O_3$.aq oder Mischungen dieser Träger verwendet werden.

Die Reduktion der Molybdänoberflächenverbindung I, vorzugsweise nach dem oben beschriebenen Verfahren aus dem Molybdänsäureester III hergestellt, zu Oberflächen-Verbindungen des Molybdäns mit einer Oxydationsstufe $<3$ gelingt durch Reduktion mit CO bei gleichzeitiger UV-Bestrahlung.

Statt Molybdäntrioxid kann auch eine andere Molybdänverbindung ohne Alkoholumsatz gewählt werden, wenn die Polymerisation des Molybdäns nicht stört und durch Sauerstoffzugabe genügend Molybdänoberflächenverbindung I zur Verfügung steht. Die Molybdänoberflächenverbindung lumineszierf bei UV-Strahlung.

Erfindungsgemäß werden die Molybdänoberflächenverbindungen I und II als Redox-Katalysatoren, die Molybdänoberflächenverbindung I auch als $H_2O$-Indikator oder zur Umwandlung kurzwelliger in längerwellige Strahlung und die Molybdänoberflächenverbindung II in reduzierter Form auch zur Entfernung von Kohlenmonoxid aus Gasen oder als Absorptionsmittel für Wasserstoff verwendet.

Die Vorteile des erfindungsgemäßen Verfahrens folgen aus der einfachen Darstellungsweise der Molybdänoberflächenverbindungen:

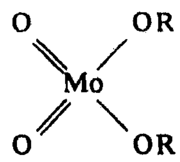

(III), $R = (CH_2)_2—OH$

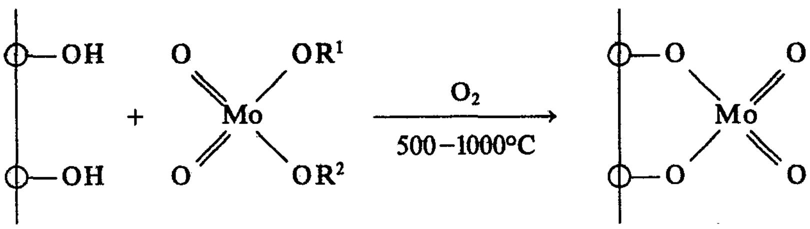


[a] [b]

$R^1 = (CH_2)_{2-6}—OH$

$R^2 = (CH_2)_{2-6}—OH$

(I)

(IV), [a + b]

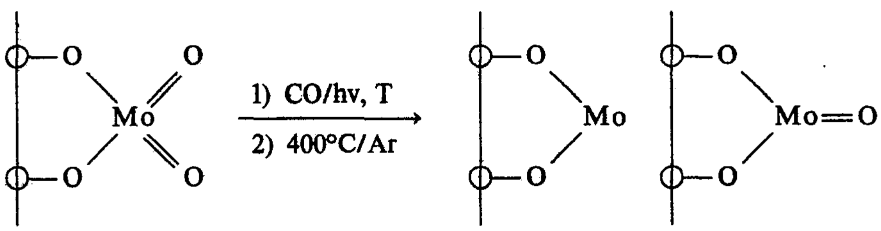


(I) (II) (V)

Molybdäntrioxid wird unter Bildung des Molybdänsäureesters III bei der Siedehitze des mehrwertigen Alkohols mit dem mehrwertigen Alkohol gegebenenfalls unter Zusatz eines weiteren, unter Umständen auch aromatischen Kohlenwasserstoffs umgesetzt. Vorzugsweise erfolgt die Umsetzung des Molybdäntrioxids mit Äthylenglykol und mit aromatischen Kohlenwasserstoffen bei 100°-150°C. Die Dotierung des oxydischen Trägers, vorzugsweise $SiO_2$.aq erfolgt in wässeriger Suspension mit dem gelösten Molybdänsäureester III bei Raumtemperatur. Als oxydischer Träger wird vorzugsweise $SiO_2$.aq mit einer Oberfläche $\geq 200$ $m^2/g$ verwendet.

Die prozentuale Konzentration des Molybdänsäureesters III in der Lösung soll etwa doppelt so groß sein wie die angestrebte Metallkonzentration auf dem Träger. Die Dotierung des oxydischen Trägers kann durch gleichzeitige Zugabe des Molybdänsäureesters und Chromtrioxid erfolgen.

Die nachfolgende Aktivierung der gelben, vorgetrockneten Substanz IV erfolgt durch langsames Aufheizen, wobei der Träger stufenweise Wasser abgibt und der Ester im Sauerstoffstrom oxydiert wird. Die Aktivierung wird bei einer Endtemperatur von 500° bis 1000°C, vorzugsweise bei 700° bis 900°C während einer Dauer von zwei bis zehn Stunden durchgeführt. Die Dauer der Aktivierung hängt von der Strömungsgeschwindigkeit des Sauerstoffstromes ab.

Zur Darstellung der Molybdänoberflächenverbindung II wird die Molybdänoberflächenverbindung I, z. B. das aktivierte Produkt mit reinem Kohlenmonoxydgas bei gleichzeitiger UV-Bestrahlung mit Wellenlängen unter 370 nm, vorzugsweise unter 310 nm reduziert. Aus dem sich zunächst bildenden CO-Komplex werden die CO-Gruppen weitgehend bei ca. 400°C im Argonstrom entfernt. Es bildet sich die grüne Molybdänoberflächenverbindung II in reduzierter Form.

Die Molybdänoberflächenverbindung I kann in oxydierter Form zur Oxidation von Kohlenmonoxid, als $H_2O$-Indikator oder zur Umwandlung kurzwelliger in längerwelliger Stahlung verwendet werden.

Die Molybdänoberflächenverbindungen II und I können in reduzierter bzw. oxydierter Form als Redox-Katalysatoren verwendet werden.

Schließlich kann die Molybdänoberflächenverbindung II in reduzierter Form zur Entfernung vom Kohlenmomoxid aus Gasen oder als Absorptionsmittel für Wasserstoff eingesetzt werden.

Produktbeschreibung der Molybdänoberflächenverbindung I

Absorptionsmaximum im diffusen Reflexspektrum:
Δ 270 nm—300 nm

Emissionsmaximum der Photolumineszens:
465 nm (300° K)
479 nm (160° K)

Die Verbindung bildet mit $H_2O$ einen gelben Komplex.

Produktbeschreibung der Molybdänoberflächenverbindung II

Absorptionsmaximum im diffusen Reflexspektrum:
650 nm
800 nm

Die Molybdänoberflächenverbindung II

- bildet mit $O_2$ (bei 25° C) ein Peroxid: 460 nm
- reagiert mit $O_2$ unter Chemilumineszenz
- chemisorbiert CO IR: 2082 2048 2130 2140 $cm^{-1}$
- chemisorbiert $H_2$

Beispiel für die Darstellung der Molybdänoberflächenverbindung I

Cis-Dioxobis-(2-hydroxyäthyl-1-oxo) molybdän (6) (Molybdänsäureester III)

130 g $MoO_3$ werden in 1 l Äthylenglykol und 200 ml Toluol gelöst. Die Lösung läßt man 1 1/2 Stunden unter Rückfluß sieden und führt die organische Phase über einen Wasserabscheider in das Reaktionsgefäß zurück. Anschließend wird das Toluol im Wasserstrahlvakuum abgezogen. Das Produkt kristallisiert über Nacht bei Raumtemperatur aus.

Dotierung

50 g Molybdänsäureester III werden in 500 ml $H_2O$ gelöst und 250 g $SiO_2$.aq zugefügt. Die Lösung wird abgesaugt und das Produkt bei Raumtemperatur unter Normaldruck und Lichtausschluß langsam getrocknet.

Aktivierung

Das gelbe, vorgetrocknete Produkt wird in trockenem Sauerstoffstrom bei einer Endtemperatur zwischen 700° bis 900° C während zwei bis zehn Stunden aktiviert.

Beispiel für die Darstellung von Molybdänoberflächenverbindung II

Ein Produkt, das eine Molybdän 6-Oberflächenverbindung auf Silicagel enthält — wie die Molybdänoberflächenverbindung I — wird mit reinem Kohlenmonoxidgas bei gleichzeitiger UV-Bestrahlung reduziert. Nach Beendigung der Reduktion wird die Molybdänoberflächenverbindung II bei ca. 400° C in reinem Inertgasstrom ausgeheizt und auf Raumtemperatur abgekühlt. Die Molybdänoberflächenverbindung II enthält etwas chemisorbiertes CO, das bei 400° C nicht entweicht.

**Patentansprüche**

1. Molybdänoberflächenverbindung auf einem oxydischen Träger mit großer Oberfläche erhältlich dadurch, daß in einem ersten Verfahrensschritt Molybdäntrioxid mit einem zweiwertigen Alkohol mit 2 bis 6 C-Atomen zur Reaktion gebracht und der dabei entstehende Molybdänsäureester (III) isoliert wird, und daß in einem zweiten Verfahrensschritt der Molybdänsäureester (III) mit dem oxidischen

Träger im Sauerstoffstrom bei 500° bis 1000° C zu einer Molybdänoberflächenverbindung (I) mit Molybdän in der Oxydationsstufe +6 umgesetzt wird und daß in einem dritten Verfahrensschritt diese Molybdänoberflächenverbindung (I) anschließend Kohlenmonoxidgas bei gleichzeitiger UV-Bestrahlung reduziert wird.

2. Verfahren zur Herstellung von Molybdänoberflächenverbindungen auf einem oxydischen Träger mit großer Oberfläche dadurch gekennzeichnet, daß in einem ersten Verfahrensschritt Molybdäntrioxid mit einem zweiwertigen Alkohol mit 2 bis 6 C-Atomen zur Reaktion gebracht und der dabei entstehende Molybdänsäureester (III) isoliert wird, und daß in einem zweiten Verfahrensschritt der Molybdänsäureester (III) mit dem oxydischen Träger im Sauerstoffstrom bei 500° bis 1000° C zu einer Molybdänoberflächenverbindung (I) mit Molybdän in der Oxydationsstufe +6 umgesetzt wird.

3. Verfahren zur Herstellung von Molybdänoberflächenverbindung auf einem oxydischen Träger mit großer Oberfläche, dadurch gekennzeichnet, daß in einem ersten Verfahrensschritt Molybdäntrioxid mit einem zweiwertigen Alkohol mit 2 bis 6 C-Atomen zur Reaktion gebracht und der dabei entstehende Molybdänsäureester (III) isoliert wird, und daß in einem zweiten Verfahrensschritt der Molybdänsäureester (III) mit dem oxydischen Träger im Sauerstoffstrom bei 500° bis 1000° C zu einer Molybdänoberflächenverbindung (I) mit Molybdän in der Oxydationsstufe +6 umgesetzt wird und daß in einem dritten Verfahrensschritt diese Molybdänoberflächenverbindung (I) anschließend mit Kohlemonoxidgas bei gleichzeitiger UV-Bestrahlung reduziert wird.

4. Verfahren nach Anspruch 3, dadurch gekennzeichnet, daß als Alkohol mit 2 vicinalen OH-Gruppen eingesetzt wird.

5. Verfahren nach Anspruch 3, dadurch gekennzeichnet, daß als Alkohol Äthylenglykol eingesetzt wird.

6. Verfahren nach Anspruch 3 bis 5, dadurch gekennzeichnet, daß als oxydischer Träger $SiO_2$.aq mit einer Oberfläche ≧ 200 $m^2/g$ verwendet wird.

7. Verfahren nach Anspruch 3 bis 5, dadurch gekennzeichnet, daß der oxidische Träger gleichzeitig mit Molybdänsäureester und mit Chromtrioxid umgesetzt wird.

8. Verfahren nach Anspruch 7, dadurch gekennzeichnet, daß der Molybdänsäureester durch Umsetzung von Molybdäntrioxid mit Äthylenglykol und mit aromatischen Kohlenwasserstoffen bei 100° bis 150° C dargestellt wird.

9. Verwendung der Molybdänoberflächenverbindung gemäß Anspruch 2 in oxydierter Form zur Oxydation von Kohlenmonoxid, als $H_2O$-Indikator oder zur Umwandlung kurzwelliger in längerwelliger Strahlung.

10. Verwendung der Molybdänoberflächenverbindungen gemäß Anspruch 1 und 2 in reduzierter bzw. oxydierter Form als Redox-Katalysator.

11. Verwendung der Molybdänoberflächenverbindungen gemäß Anspruch 1 in reduzierter Form zur Entfernung von Kohlenmonoxid aus Gasen oder als Absorptionsmittel für Wasserstoff.

## Claims

1. Moybdenum surface compound on an oxidic carrier with large surface area obtainable in that in a first method step molybdenum trioxide is reacted with a bivalent alcohol with 2 to 6 carbon atoms and the resulting molybdic acid ester (III) is isolated, and that in a second method step the molybdic acid ester (III) is converted with the oxidic carrier in an oxygen stream at 500° to 1000° C to a molybdenum surface compound (I) in the oxidation state +6 and that in a third method step this molybdenum surface compound (I) is reduced with carbon monoxide gas with simultaneous ultra-violet radiation.

2. Method for the manufacture of molybdenum surface compounds on an oxidic carrier with large surface area characterized in that in a first method step molybdenum trioxide is reacted with a bivalent alcohol with 2 to 6 carbon atoms and the resulting molybdic acid ester (III) is isolated, and that in a second method step the molybdic acid ester (III) ist converted with the oxidic carrier in an oxygen stream at 500° to 1000° C to a molybdenum surface compound (I) in the oxidation state +6.

3. Method for the manufacture of molybdenum surface compound on an oxidic carrier with large surface area characterized in that in a first method step molybdenum trioxide is reacted with a bivalent alcohol with 2 to 6 carbon atoms and the resulting molybdic acid ester (III) ist isolated, and that in a second method step the molybdic acid ester (III) is converted with the oxidic carrier in an oxygen stream at 500° to 1000° C to a molybdenum surface compound (I) in the oxidation state +6 and that in a third method step this molybdenum surface compound (I) is reduced with carbon monoxide gas with simultaneous ultra-violet radiation.

4. Method according to Claim 3, characterized in that an alcohol with two adjacent OH-groups is used.

5. Method according to Claim 3, characterized in that ethylene glycol is used as the alcohol.

6. Method according to Claims 3 to 5, characterized in that $SiO_2$ aq. with a surface area of 200 $m^2/g$ is used as oxidic carrier.

7. Method according to Claims 3 to 5, characterized in that the oxidic carrier is converted simultaneously with molybdic acid ester and with chromium trioxide.

8. Method according to Claim 7, characterized in that the molybdic acid ester is prepared by conversion of molybdenum trioxide with ethylene glycol and with aromatic hydrocarbons at 100° to 150° C.

9. Use of the molybdenum surface compound in accordance with Claim 2 in oxidised form for oxidation of carbon monoxide, as $H_2O$ indicator or for transforming short wave into long wave radiation.

10. Use of the molybdenum surface compounds in accordance with Claims 1 and 2 in reduced or oxidised form as redox catalyst.

11. Use of the molybdenum surface compounds in accordance with Claim 1 in reduced form for removal of carbon monoxide from gases or absorption media for hydrogen.

**Revendications**

1. Liaison superficielle molybdénique sur un support oxydique de grande surface, caractérisé en ce qu'on l'obtient par une première opération où son mis en réaction du trioxyde de molybdène avec un alcool binaire ayant de deux à six atomes de carbone, ce qui a pour effet de produire un ester acide (III) de molybdène, après quoi, dans une seconde opération, l'ester acide (III) de molybdène et le support oxydique sont transformés dans un courant d'oxygène entre 500° et 1000° C, en une liaison superficielle (I) molybdénique avec le molybdène en phase d'oxydation +6, alors que une troisième opération, cette liaison superficielle (I) molybdénique est réduite par du gaz carbonique avec irradiation simultanée aux rayons ultra-violets.

2. Procédé pour la réalisation sur un support oxydique à grande surface, de liaisons superficielles molybdéniques suivant la revendication 1, caractérisé en ce que, dans une première opération, on met en réaction du trioxyde de molybdène avec un alcool binaire ayant de deux à six atomes de carbone, ce qui a pour effet de produire un ester acide (III) de molybdène, après quoi, dans une seconde opèration l'ester acide (III) de molybdène et le support oxydique sont transformés dans un courant d'oxygène entre 500° et 1000° C en une liaison superficielle (I) molybdénique avec le molybdène en phase d'oxydation +6.

3. Procédé pour la réalisation sur un support oxydique, à grande surface, de liaisons superficielles molybdéniques suivant la revendication 1, caractérisé en ce que, dans une première opération, on met en réaction, du trioxyde dem molybdène avec un alcool binaire ayant de deux à six atomes de carbone, ce qui a pour effet de produire un ester acide (III) de molybdène, après quoi, dans une seconde opération, l'ester acide (III) de molybdène et le support oxydique sont transformeés dans un courant d'oxygène entre 500° et 1000° C, en une liaison superficielle (I) molybdénique avec le molybdène en phase d'oxydation +6, alors que, dans une troisième opération, cette liaison superficielle (I) molybdénique est réduite par du gaz carbonique avec irradiation simultanée aux rayons ultra-violets.

4. Procédé suivant la revendication 3, caractérisé en ce que l'alcool a deux radicaux OH voisins.

5. Procédé suivant la revendication 3, caractérisé en ce que l'alcool est de l'éthylène-glycol.

6. Procédé suivant les revendications 3 à 5, caractérisé en ce que le support est de la silice Si $O_2$ d'un grammage de 200 $mm^2/g$.

7. Procédé suivant les revendications 3 à 5, caractérisé en ce que le support oxydique est simulnanément revêtu avec un ester acide de molybdène et avec du trioxyde de chrome.

8. Prodédé suivant la revendication 7, caractérisé en ce que l'ester acide de molybdène est obtenu à partir de trioxyde de molybdène, d'éthylène-glycol, et d'hydrocarbures aromatiques à des températures de 100° à 150° C.

9. Utilisation de la liaison superficielle molybdénique suivant la revendication 2 sous forme oxydée pour oxyder de l'oxyde de carbone, comme indicateur de $H_2O$ ou pour convertir un rayonnement à courte longueur d'ondes en un rayonnement à grandes longueur d'ondes.

10. Utilisation des liaisons superficielles molybdénique suivant les revendications 1 et 2, sous forme oxydée ou sous forme réduite, pour constituer un catalyseur d'oxydo-réduction.

11. Utilisation des liaisons superficielles molybdéniques suivant la revendication 1, sous forme réduite, pour éliminer l'oxyde de carbone des gaz ou des absorbants de l'hydrogène.